# NEW EUROPEAN PATENT SPECIFICATION

(11) **EP 0 881 750 B2**
(45) Date of publication and mention of the opposition decision: **22.06.2011**
(45) Mention of the grant of the patent: 26.03.2003
(21) Application number: 98109570.6
(22) Date of filing: 26.05.1998
(51) Int. Cl.: H02K 3/24, H02K 9/06, H02K 3/12, H02K 3/28, H02K 19/22

(54) **Alternator for vehicle**
Wechselstromgenerator für Kraftfahrzeuge
Alternateur pour véhicule automobile

(30) Priority: 26.05.1997 WO PCT/JP97/01778; 22.09.1997 WO PCT/JP97/03374; 26.09.1997 JP 27975097; 26.09.1997 JP 27975197; 26.09.1997 JP 27975297; 14.10.1997 JP 29788297; 24.10.1997 JP 30973197; 10.12.1997 JP 36206397; 10.02.1998 JP 4439098; 13.02.1998 JP 4903998; 13.02.1998 JP 4904098; 26.02.1998 JP 6468498; 08.04.1998 JP 11417498; 23.04.1998 JP 11541898
(43) Date of publication of application: 02.12.1998
(73) Proprietor: DENSO CORPORATION, Kariya-city, Aichi-pref. 448-8661 (JP)
(72) Inventor: Umeda, Atsushi, Kariya-shi, Aichi-pref. 448-8661 (JP); Kusase, Shin, Kariya-shi, Aichi-pref. 448-8661 (JP); Shiga, Tsutomu, Kariya-shi, Aichi-pref. 448-8661 (JP)
(74) Representative: Winter, Brandl, Fürniss, Hübner, Röss, Kaiser, Polte - Partnerschaft

(56) References cited:
- EP-A- 0 671 802
- WO-A-92/06527
- DE-A1- 4 031 276
- DE-U- 8 913 392
- FR-A- 1 465 068
- FR-A1- 2 603 429
- SU-A1- 1 377 964
- US-A- 1 826 295
- US-A- 4 418 295
- PATENT ABSTRACTS OF JAPAN vol. 012, no. 281 (E-641), 2 August 1988 -& JP 63 059744 A (MITSUBA ELECTRIC MFG CO LTD), 15 March 1988

## Description

### BACKGROUND OF THE INVENTION

### 1. Field of the Invention

The present invention relates to the stator arrangement of an alternator driven by an internal combustion engine for a vehicle such as a passenger car, a truck, or a boat.

### 2. Description of the Related Art

Recently, various devices such as safety devices are increased, and the output power of alternators are required to be increased. This also requires increase in the heat radiation of alternators.

PCT Patent Application WO 92/06527 A discloses an example of a high power alternator. In this application, U-shaped conductor segments are inserted into slots of the stator core from one end and are welded with one another to form a stator winding. Because the U-shaped conductor segments can be disposed regularly, a high conductor occupation ratio can be provided, thereby increasing the output power.

Another structure for improving the cooling effect of the stator winding is disclosed in JP-U-1-27406. The coil ends of the stator winding are formed flat to increase surfaces of winding to be cooled

In these conventional structures, two coil-end groups have the same shape and the same size, and there is no difference in the heat radiation. Because the amount of the cooling air sent to two coil-end groups is different, there is a difference in temperature between two coil-end groups.

Another prior-art structure can be found in German utility model No. G 89 13 392 which relates to an alternator with fan ventilation, in particular for automotive vehicles, including a stator having a stator core with a stator winding which has first and second coil-end groups respectively composed of coil ends disposed annularly on opposite ends of the stator core, a rectifier disposed near the first coil-end group, and an air drive unit for sending cooling air to the first and second coil-end groups, wherein the first coil-end group extends further in the axial direction from the stator core und thus has a larger surface to be cooled by the air drive unit than the second coil-end group.

French Patent Publication No. 1.465.068 discloses a configuration of a coil-end group in a winding of a rotating electric machine in which projected surfaces of each coil end of a coil end group in a radial direction are disposed in a cascading shape so that each coil end is directly exposed to the cooling air from an adjacent fan.

However, in an alternator having a pulley at the front thereof and a rectifier at the rear thereof, the heat of the rectifier heats the cooling air sent to the rear-side coil-end group, causing the temperature of this coil-end group to be higher than the other.

Moreover, the rear side of the alternator faces an engine and is heated thereby. Thus, temperature of the cooling air supplied to the rear-side coil-end group may become high according to the location of the alternator in the engine compartment. As a result, the rear-side coil-end group cannot be cooled and the temperature thereof becomes too high.

This causes temperature rise of the stator winding with an undesirable difference in temperature between the two coil-end groups. The temperature difference between the two coil-end groups causes a difference in temperature between two parts of the housing. If this temperature difference becomes too big, the axis of the rotor may be shifted due to a difference in the thermal expansion thereof, thereby causing magnetic noise and vibration.

### SUMMARY OF THE INVENTION

In view of the above problem, the present invention is to provide a new and improved alternator for a vehicle.

The present invention is to provide an alternator which can supply effective cooling air corresponding to a high output power without regard to heat of the rectifier or location of the alternator.

The present invention is to provide an alternator in which insufficient cooling of one of two coil-end groups is improved.

The present invention is to provide an alternator in which an abnormal temperature difference between two coil-end groups can be improved.

The present invention is to provide an alternator in which the temperature of the coil-end group near the rectifier is lowered.

These objects are achieved by an alternator according to claim 1.

### BRIEF DESCRIPTION OF THE DRAWINGS

Other objects, features and characteristics of the present invention as well as the functions of related parts of the present invention will become clear from a study of the following detailed description, the appended claims and the drawings. In the drawings:
Fig 1 is a cross-sectional view of an alternator for a vehicle according to a first embodiment of the present invention;
Fig. 2 is a fragmentary view of a stator according to the first embodiment;
Fig. 3 is a perspective view of conductor segments according to the first embodiment;
Fig. 4 is a schematic view of segments inserted into stator core according to the first embodiment;
Fig. 5 is a portion of a winding diagram of the stator according to the first embodiment;
Fig. 6 is a portion of a winding diagram of the stator according to the first embodiment;
Fig. 7 is a portion of a winding diagram of the stator according to the first embodiment;
Fig. 8 is a circuit diagram according to the first embodiment;
Fig. 9 is a schematic diagram of a first coil-end group of the stator according to a second embodiment of the invention;
Fig. 10 is a schematic view of segments inserted into stator core according to the second embodiment;
Fig. 11 is a schematic diagram of a first coil-end group of the stator according to a third embodiment of the invention; and
Fig. 12 is a schematic view of segments inserted into stator core according to the third embodiment.

### DETAILED DESCRIPTION OF THE PREFERRED EMBODIMENTS

Alternators for vehicles according to various embodiments of the present invention are described hereafter with reference to the appended drawings.

### [First Embodiment]

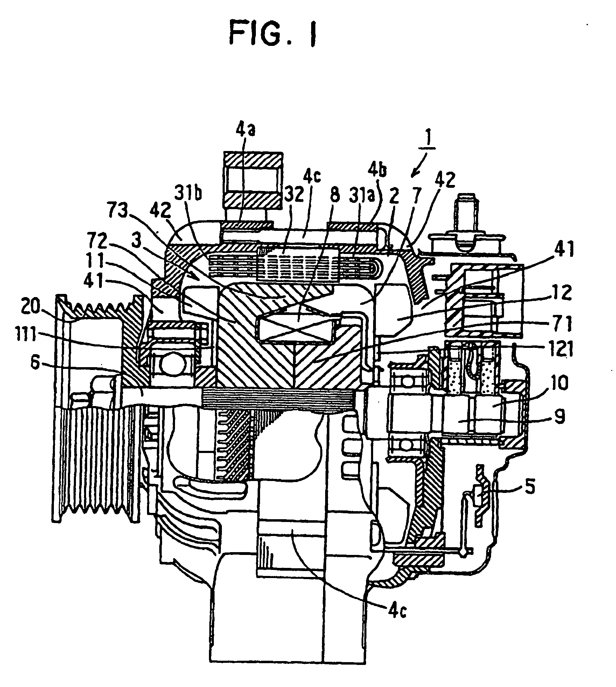

Figs. 1-8 show a first embodiment of the present invention.

Alternator 1 is composed of stator 2, which functions as an armature, rotor 3, which functions as a magnetic field, front and rear housings 4a, 4b for supporting rotor 3 and stator 2 by screw bolts 4c, and rectifier 5 for converting ac power to dc power.

Rotor 3 rotates together with shaft 6 and is composed of Lundell type pole core 7, field coil 8, slip rings 9, 10 and cooling fans 11, 12. Shaft 6 is linked with pulley 20 to be driven by an engine (not shown) mounted on a vehicle.

Lundell type pole core 7 is composed of a pair of pole core members. Each of the pole core 7 members is composed of boss portion 71 fitted to shaft 6, disk portion 72 extending radially from boss portion 71 and a plurality of claw poles 73.

Pulley-side mixed flow fan 11 has inclined fan blades inclined with regard to base plate 111 which is welded to an end pole core 7 and upright fan blades. Centrifugal fan 12 has upright fan blades disposed upright to base plate 121 welded to the other end at the counter-pulley-side of pole core 7.

Air intake windows 41 are formed on an axial end of housing 4, and air discharge windows 42 are formed on the shoulder portions of housing 4 opposite to first coil-end group 31a and second coil-end group 31b.

Rectifier 5 is disposed at the counter-pulley side of alternator 1. Thus, first coil-end group 31a is disposed to correspond to rectifier 5.

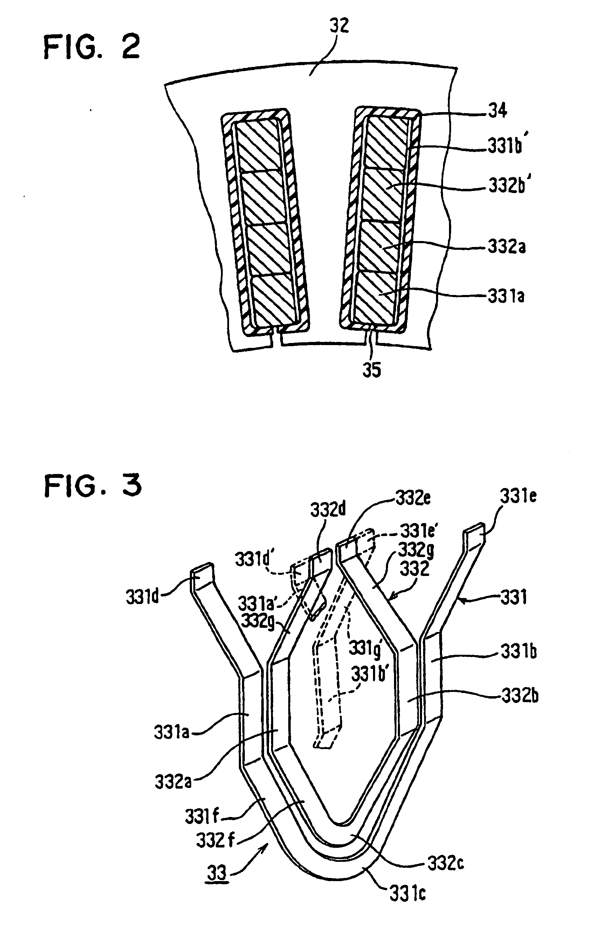

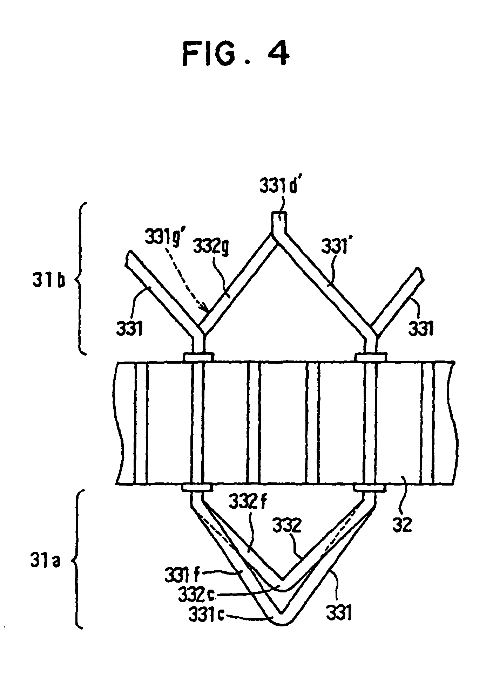

Stator 2 is composed of stator core 32, a stator winding disposed in slots 35 formed in stator core 32 and insulators 34 for insulating the conductor members from stator core 34. Fig. 4 is a schematic view of a phase winding of the stator core 32 viewed from the radially inner side of stator core 32. As shown in Fig. 2, stator core 32 has a plurality of slots 35 to accommodate the conductor members of the multi-phase stator winding. Stator core 32 of this embodiment has 36 slots formed at equal intervals correspond to the number of poles of rotor 3 in order to accommodate three-phase stator winding.

The stator winding inserted in slots 35 of stator core 32 is composed of each single conductor member. Each of slots 35 has an even number of conductor members (four conductor members according to this embodiment). Four conductor members in each one of slots 35 are aligned in the radial direction of stator core 32 to form an innermost layer, an inner middle layer, an outer middle layer and an outermost layer. The conductor members are connected in a prescribed pattern to form the stator winding. The conductor members in each of slots 35 according to this embodiment extend from opposite ends of stator core 32 to form continuous coil ends at one end thereof and connected coil ends at the other end thereof.

One of the conductor members in one of slots 35 is paired with one of the conductor members in another of slots 35 that is a prescribed pole-pitch spaced apart from the former.

In order to line up conductor members in the coil ends and ensure spaces for insulation and cooling therebetween, one of the conductor members in one layer in one of slots 35 is paired with one of the conductor members in another layer in another of slots 35 that is a prescribed pole-pitch spaced apart from the former.

For example, conductor member 331a in the innermost layer in one of slots 35 is paired with conductor member 331b in the outermost layer in another of slots 35 that is one pole-pitch spaced apart from the former. In the same manner, conductor member 332a in the inner middle layer in one of slots 35 is paired with conductor member 332b in the outer middle layer in another of slots 35 that is one pole-pitch spaced apart from the former in clockwise.

The paired conductor members have continuous U-turn portions 331c, 332c respectively.

Thus, at one end of stator core 32, the continuous U-turn portion of the conductor members disposed in the outermost layer and innermost layer surrounds the continuous U-turn portion of the conductor members in the outer middle layer and the inner middle layer. In other words, one of two U-turn portions of paired conductor members in the same slot surrounds the other of the U-turn portions at one end of stator core 32. The conductor members in the outer middle layer and the conductor members in the inner middle layer form inner coil ends, and the conductor members in the outermost layer and the conductor members in the innermost layer form outer coil ends.

On the other hand, conductor member 332a in the inner middle layer in one of slots 35 is also paired with conductor segment 331a' in the innermost layer in another of slots 35 that is one pole-pitch spaced apart clockwise therefrom. In the same manner, conductor member 331b' in the outermost layer in one of slots 35 is also paired with conductor segment 332b in the outer middle layer in another of slots 35 that is one pole-pitch spaced apart clockwise therefrom. These paired conductor members are respectively welded together at the other end of stator core 32.

Therefore, joint potions of the conductor members in the outermost layer and the conductor members in the outer middle layer and joint portions of the conductor members in the innermost layer and the conductor members in the inner middle layer are aligned in a circumference of the other end of stator 32. The joint portions of the conductor members in the outermost layer and those in the outer middle layer and the joint portions of the conductor members in the innermost layer and those in the inner middle layer form contiguous-layer-coil-ends.

Thus, the paired conductor members are arranged so that the members do not interfere with one another on the other end of stator core 32.

Each of the conductor members is a portion of a conductor segment having a certain shape and a rectangular cross-section. As shown in Fig. 3, one of the conductor members in the innermost layer and one of the conductor members in the outermost layer form a large U-shaped conductor segment 331. One of the conductor segments in the inner middle layer and one of the conductor segments in the outer middle layer form a small U-shaped conductor segment 332.

The large and small conductor segments 331, 332 are the base segments 33. The base segments are disposed in the slots in a prescribed rule to form a winding turning two times around stator core 32. Each of the specific segments for terminals of the winding and for connecting the first turn and the second turn of the winding has a specific shape. Three specific segments are necessary in this embodiment. The first turn of the winding and the second turn of the same are connected between the outermost layer and outer middle layer and between the innermost layer and inner middle layer, thus forming specific coil ends.

A manufacturing process of the stator winding is described hereafter. Base segments 33 are disposed so that each of U-turn portions of U-shaped large segments surrounds one of U-turn portions 332 of U-shaped small segments 332 and are inserted to the respective slots of stator core 32 from the same side thereof. Conductor members 331a of large segments 331 are disposed in the innermost layer of slots 35, conductor members 332a of small segments 332 are disposed in the inner middle layer, conductor members 331b of large segments 331 are disposed in the outermost layer in the slots which are one pole-pitch spaced apart clockwise from the above-said slots, and conductor members 332b of small segments 332 are disposed in the outer middle layer in the slots which are one pole-pitch spaced apart from the above-said slots 35.

As a result, straight portions of conductor members 331a, 332a, 332b', 331b' are lined up as shown in Fig. 2. Conductor members 332b', 331b' are paired with conductor members of large and small segments disposed in the slot that is one pole-pitch spaced apart therefrom.

Thereafter, in second coil-end group 31b, the conductor members in the outermost layer and the innermost layer are bent to separate from each other so that each of joint portions 331d, 331e is inclined to cover 1.5 slots. The conductor members in the inner middle layer and the outer middle layer are also bent to separate from each other so that each of joint portions 332d, 332e is inclined to cover 1.5 slots.

The above steps are repeated for all conductor segments 33 in slots 35. In the second coil-end group 31b, joint portion 331e' of the conductor member in the outermost layer and joint portion 332e of the outer middle layer, and also joint portion 332d of the conductor member in the inner middle layer and joint portion 331d' of the conductor member in the innermost layer are welded by an ultrasonic wave welder or an arc welder, or soldered for electric connection.

U-turn portions 331c of large segment 331 is more distant from stator core 32 than U-turn portions 332c of small segments 332. In other words, first coil-end group 31a is composed of middle-layer-coil ends and both the innermost and outermost coil ends shifted axially from one another, so that the inclination angle of inclined portion 331f of large segments 331 to the slot becomes different from the inclination angle of inclined portion 332f of small segments 332. Accordingly, as shown in Fig. 4, inclined portion 331f of large segments 331 and inclined portion 332f of small segments 332 of first coil-end group 31a do not overlap with each other in the radial direction viewed from the radially inner side of the stator core. In the second coil-end group 31b, inclined portion 331g of large segments 331 and inclined portion 332g of small segments 332 as well as two joint portions thereof do overlap with each other in the radial direction.

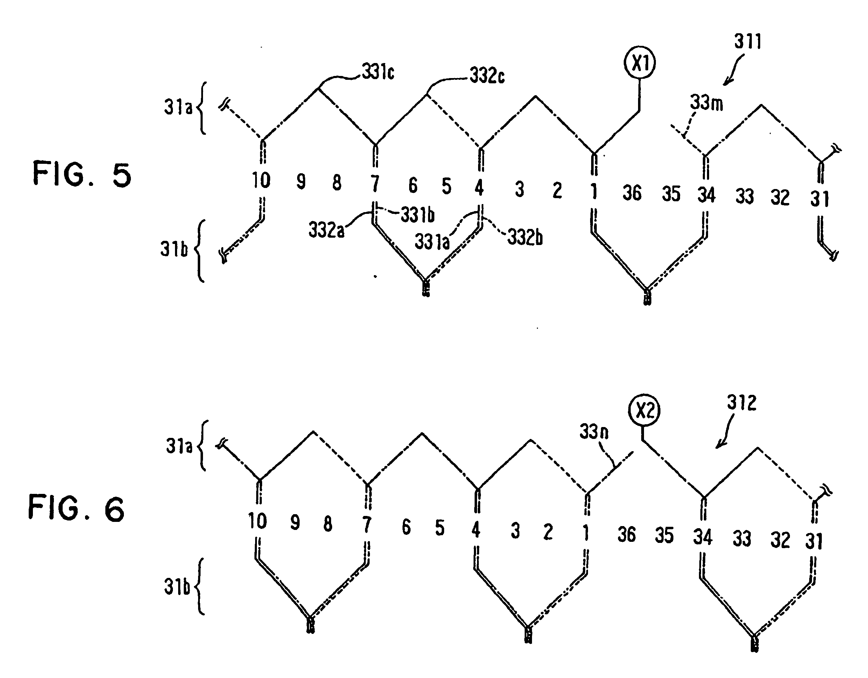

X-phase winding of three phase windings is described with reference to Figs. 5, 6 and 7. The conductor members in the outermost layer are indicated by one-dot chain lines, those in the outer middle layer are indicated by broken lines, those in the inner middle layer are indicated by solid lines, and those in the innermost layer are indicated by two-dot chain line. First coil-end group 31a is shown on the upper side of the diagrams, and second coil-end group 31b is shown on the lower side of the diagrams. The reference numerals aligned in the center lateral line indicate the slot numbers. This is the same as other phase-windings.

As shown in Fig.5, each of segments 33 is inserted in every fourth slot from slot "1". In the second coil-end group 31b, an end of the conductor member extending from the outer middle layer in one of slots 35 is connected to the end of the conductor segment extending from the outermost layer of another of slots 35 spaced apart clockwise one pole-pitch therefrom. An end of the conductor member extending from the innermost layer of one of slots is also connected to the end of the conductor member extending from the inner middle layer in one of slots 35 spaced apart clockwise one pole-pitch therefrom. Thus, first winding 311 is formed to have a two-turn wrap-wound coil each pole.

In the same manner, as shown in Fig. 6, second winding 312 is formed.

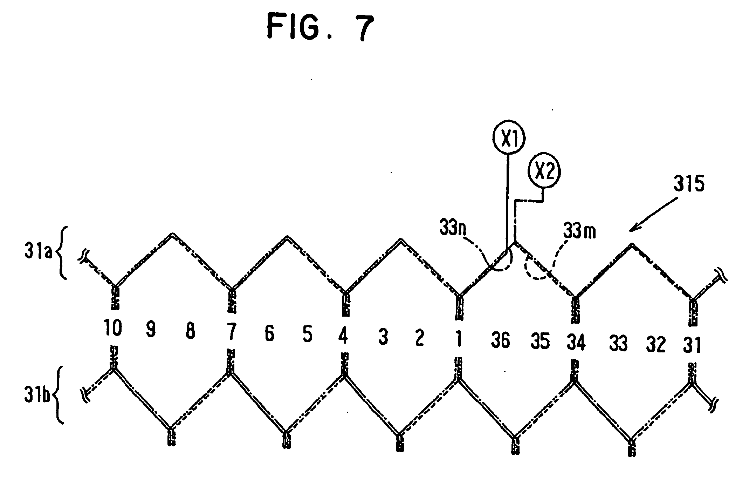

Windings 311 and 312 shown in Figs. 5 and 6, are connected at end 33m of first winding 311 and end 33n of second winding 312 as shown in Fig. 7, thereby forming four-turn winding 315 having four conductor members in one slot.

The conductor segment having joint portion of end 33m of first winding 311 and end 33n of second winding 312 is in shape different from large base segment 311 and small base segment 312.

X-phase winding has three specific segments: the segment having joint portion of end 33m of first winding 331 and end 33n and second winding 332, the segment having terminal X1 and the segment having terminal X2.

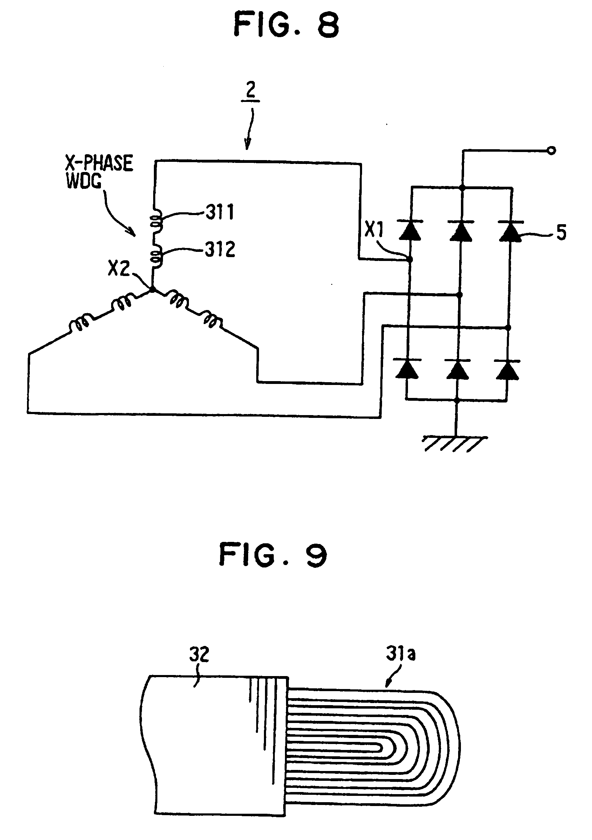

In the same manner, Y-phase winding and Z-phase winding in those of slots 35 which are 120 degree in angle different from one another are formed. Terminal X1 of X-phase winding as well as, terminals Y1, Z1 of Y-, Z-phase windings are connected to rectifier 5, and terminals X2 and other terminals Y2, Z2 (not shown) are connected together to the neutral point. As shown in Fig. 8, the three phase-windings are connected in the star connection. The winding shown in Fig. 7 has terminal X1 extending axially from the side of first coil-end group 31a to be connected to rectifier 5.

### [Operation and Effect of the first embodiment]

First coil-end group 31a is disposed at the side of rectifier 5, which is opposite to the pulley-side, and second coil-end group 31b is disposed at the pulley-side. As a result, the cooling air sent to first coil-end group 31a by centrifugal fan 12 is already heated by rectifier 5.

Because the inclined portions 331f, 332f of large and small segments 331, 332 in first coil-end portion 31a have different inclined angles as described above, a set of a large and small base segments 33 do not overlap in the radial direction as shown in Fig. 4. Thus, the projected area of first coil-end group 31a viewed from the radially inner side of stator core 32 (the area of a shadow of the first coil-end group on an imaginary cylindrical surface projected from the radially inner side of the stator core) can be increased so that cooling air can be sent to all the inclined portions. That is, the area to be cooled is increased to cool first coil-end group 31a effectively.

Because mixed flow fan 11 on the side of pulley 20 has inclined blades inclining with regard to the end surface of pole core 7, the blades drive cooling air axially to the counter-pulley-side from the pulley-side where the air temperature is comparatively low. As a result, first coil-end group 31a can be cooled effectively.

Thus, first coil-end group 31a disposed near rectifier 5 can be cooled effectively, and the temperature difference between first coil-end group 31a and second coil-end group 31b can be reduced. Thus, distortion in the housings and in the gap between the rotor and stator due to a difference in the thermal expansion can be prevented, thereby reducing magnetic noise and vibration.

Further, thermal expansion of rear housing 4c at the counter-pulley-side, where the ambient temperature is high, can be prevented so that stator core 32 can be held tightly by the housings tight. As a result, breakage of the terminal wire between the stator winding and the rectifier due to vibration can be prevented.

Because comparatively cool air can be supplied from the pulley side in the axial direction to the field coil 8, the field coil can be cooled effectively to increase the output power.

Because the stator winding is composed of conductor members aligned in the radial direction in slots 35, the occupation ratio or space factor of the conductor in slots 35 can be increased to increase the output power. Because U-turn portion 332c of small segment 332 is surrounded by U-turn portion 331c of large segments 331 in first coil-end group 31a, the projected area thereof viewed from the radially inner side of stator core 32 can be increased.

Because four or more conductor members may be inserted in each of slots 35, the alternator can provide sufficient output power at a low speed range.

### [Second Embodiment]

In the first embodiment, winding 315 has four conductor members in each of slots 35. However, the number of conductor members can be increased as follows.

Fig. 9 shows a schematic view of a first coil-end group in which 8 conductor members are disposed in each slot.

The conductor members disposed in the outer two layers, the conductor members disposed in the inner two layers and two conductor members disposed side by side are combined to form a plurality of the same windings as the first embodiment, and are connected in series.

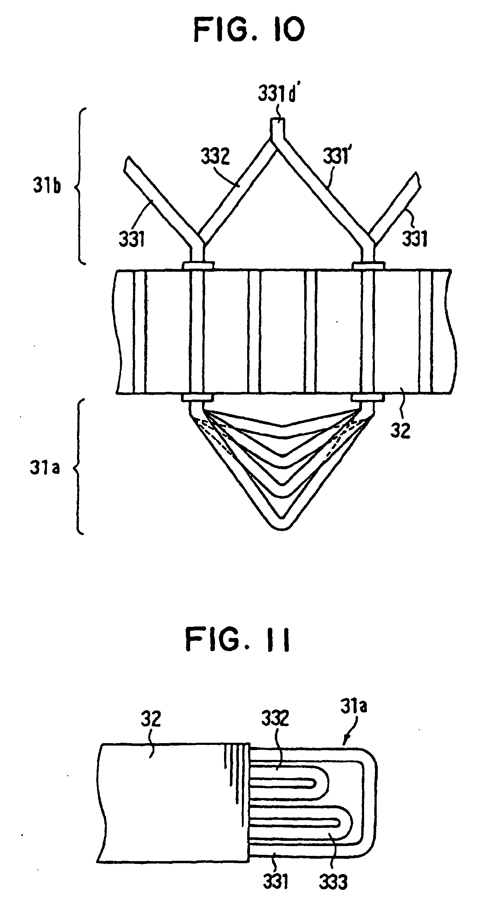

The inclined portions of the respective segments of first coil-end group 31a do not overlap with one another as shown in Fig. 10. In second coil-end group 31b, the four joint portions are in line with one another and four inclined portions overlap with one another in the radial direction. Therefore, the projected area of first coil-end group 31a viewed from the inner side of stator core 32 is larger than that of second coil-end group 31b. The increase in the cooling effect of first coil-end group 31a equalizes the temperature of both first and second coil-end groups 31a, 31b.

### [Third Embodiment]

Instead of the winding according to the first embodiment which has four conductor members in each slot, a stator winding that has six conductor members in each slot can be provided by U-shaped small segments 332, U-shaped middle segment 333 disposed in the radial direction and U-shaped large segment 331 surrounding small and middle segments 332, 333.

Fig. 11 is a schematic diagram showing a portion of first coil-end group 31a which has conductor members disposed respectively in the first from the outermost, second, third, fourth, fifth and sixth layers. Conductor members 331a, 331b' extending from the first and sixth layers form a U-turn portion. Conductor members 332a, 332b' extending the second and third layers and conductor members 333a, 333b' extending from the fourth and fifth layers form respective U-turn portions.

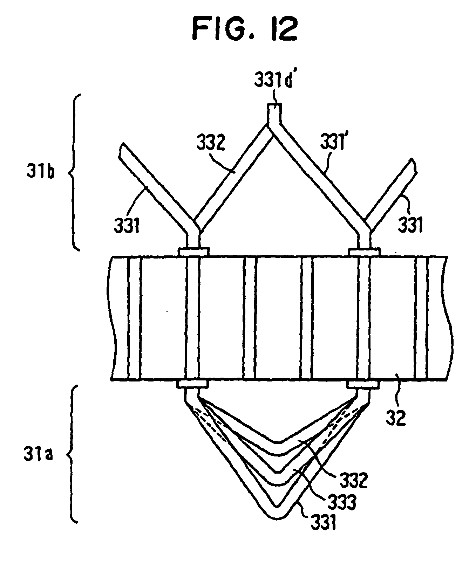

The inclined portions of the respective segments of first coil-end group 31a do not overlap with one another as shown in Fig. 12. In second coil-end group 31b, the four joint portions are in line with one another and four inclined portions overlap with one another in the radial direction. Therefore, the projected area of first coil-end group 31a viewed from the inner side of stator core 32 is larger than that of second coil-end group 31b. The increase in the cooling effect of first coil-end group 31a equalizes the temperature of both first and second coil-end groups 31a, 31b.

If the number of conductor members in each slot is 6 + 4N (N is an integer) instead of six the conductor members in the outermost layer and the innermost layer are connected by the U-turn portions.

### [Other Embodiments]

The pulley-side fan 11 can have upright blades only or inclined blades only or a mixture of inclined blades and upright blades if the temperature difference between first coil-end group 31a and second coil-end group 31b and other conditions are suitable.

In the third embodiment, U-shaped small segment 332 and U-shaped middle segment 333 are surrounded by large segment 331. However, two U-shaped small segments 332 can be surrounded by large segment 331. In this case, the U-turn portion of two small segments 332 and the inclined portions thereof overlap with each other in the radial direction in first coil-end group 31a. However, the projected area of first coil-end group 31a can be made larger than that of second coil-end group 31b. Thus, first coil-end group 31a can be cooled effectively so that the temperature difference between first coil-end group 31a and second coil-end group 31b can be made small.

In the above embodiment, rotor 3 has 12 claw poles and stator core 32 has 36 slots can be provided. Even if the number of poles and the slots is changed, the same winding structure as the above embodiments can be provided. For example, the number of the slots can be doubled to have two three-phase windings to have combined output.

In the first embodiment, the terminal wire extends from first coil-end group 31a. However, the terminal wire can be extended from second coil-end group 31b. In this case, the axial height of each of contiguous-layer-coil-ends of second coil-end group 31b can be made different. For example, the contiguous-layer-coil-ends in the inner circumference can be made lower than the contiguous-layer-coil-ends in the outer circumference so that both are shifted from each other in the axial direction.

A stator having a delta-connection of X, Y, Z-windings can be provided instead of the above star-connection of X, Y, Z-windings also. Such star-connection and delta-connection can be combined if two or more rectifiers are used.

In the above embodiments, the conductor segments are formed from flat wires. However, round wire can be used if the straight portions of conductor members 331a, 331b, 332a , 332b are formed to be flat.

In the foregoing description of the present invention, the invention has been disclosed with reference to specific embodiments thereof. It will, however, be evident that various modifications and changes may be made to the specific embodiments of the present invention without departing from the broader scope of the invention as set forth in the appended claims. Accordingly, the description of the present invention in this document is to be regarded in an illustrative, rather than restrictive, sense.

## Claims

1. An alternator for a vehicle, including:
a stator (2) having a stator core (32) with a stator winding which is inserted in slots of a stator core and which has first and second coil-end groups (31a, 31b) respectively composed of coil ends which are disposed in a regular manner and repeatedly annularly according to the pole pitch on opposite ends of said stator core (32) in the axial direction thereof,
a rectifier (5) disposed near said first coil-end group (31 a), and
an air drive unit (11, 12) for sending cooling air to both said first and second coil-end groups (31a, 31b),
**characterized in that**
said winding is formed by conductor segments which are aligned in the radial direction in the slots of the stator core;
said stator winding is composed of small and large U-shaped conductor segments, an U-turn portion of each large segment of said first coil-end group (31 a) being more distant from said stator core than an U-turn portion of each small segment; so that
said first coil-end group (31 a) has for every pair of slots which are spaced one pole pitch apart at least two coil ends which are shifted in the axial direction from each other in such a way that the projected area of said first coil-end group (31 a) as viewed from the inner side of said stator core is larger than the corresponding area of said second coil-end group (31 b); wherein
at said second coil-end group (31 b) the respective ends of the conductor segments are bent to separate from each other and to form joint portions which overlap with each other in the radial direction.

2. Alternator according to claim 1, wherein said first coil-end group (31a) has at least two inclined portions (331f, 332f) being connected to said coil ends, said inclined portions having different angles in such a way that said coil ends are shifted in the axial direction from each other.

3. Alternator according to claim 1 or 2, wherein a U-turn portion of each large segment of said first coil-end group (31 a) being more distant from said stator core than an U-turn portion of each small segment in such a way that the inclination angle of the inclined portion of each large segment differs from the inclination angle of each small segment.

4. Alternator according to one of the claims 1 to 3, wherein
said air drive unit (11, 12) is fixed to said rotor (3) and has a first cooling fan (12) disposed on an end of said rotor (3) close to said first coil-end group (31 a), and a second cooling fan (11) disposed on the other end of said rotor (3) close to said second coil-end group (31b).

5. Alternator according to claim 4, wherein said first cooling fan (12) is a centrifugal fan and said second cooling fan (11) is a mixed-flow fan.

6. Alternator according to one of claims 1 to 5, wherein
said stator winding is composed of a plurality of conductor members aligned in said slots to be disposed in inner and outer middle layers (332a, 332b') and innermost and outermost layers (331 a, 331b'),
said first coil-end group (31a) has a plurality of inside coil ends for connecting those of said conductor members which are disposed in one of said middle layers (332a, 332b') and those of said conductor members which are disposed in the other of said middle layers (332a, 332b') a certain pitch spaced apart therefrom, and a plurality of outside coil ends for connecting those of conductor members which are disposed in said innermost layer (331 b') and those of said conductor members which are disposed in said outermost layers (331a) a certain pitch spaced apart therefrom, and
said second coil-end group (31b) has a plurality of contiguous-layer coil ends for connecting those of said conductor members which are disposed in said one of said middle layers (332a, 332b') and those of said conductor members which are disposed in an adjacent one of said innermost and outermost layers (331a, 331b') a certain pitch spaced apart therefrom.

7. Alternator according to claim 6, wherein
at least four of said conductor members are disposed in each of said slots (35).

## Patentansprüche

1. Ein Drehstromgenerator für ein Fahrzeug, welcher enthält:
einen Ständer (2) mit einem Ständerkern (32) mit einer Ständerwicklung, welche in Schlitze eines Ständerkerns eingesetzt ist erste und zweite Wicklungsendgruppen (31 a, 31 b) aufweist, welche jeweils aus Wicklungsenden zusammengesetzt sind, die regelmäßig und in sich wiederholendem Muster entsprechend dem Polabstand ringförmig an entgegengesetzten Enden des Ständerkerns (32) in dessen Achsenrichtung angeordnet sind,
einen Gleichrichter (5), welcher nahe der ersten Wicklungsendgruppe (31 a) angeordnet ist, und
eine Luftantriebseinheit (11, 12) zum Senden von Kühlluft an sowohl die erste als auch die zweite Wicklungsendgruppe (31 a, 31 b),
**dadurch gekennzeichnet, dass**
die Wicklung von Leitersegmenten gebildet ist, die in radialer Richtung in den Schlitzen des Ständerkerns ausgerichtet sind;
die Ständerwicklung aus kleinen und großen U-förmigen Leitersegmenten zusammengesetzt ist, wobei ein U-Wendeabschnitt eines jeden großen Segments der ersten Wicklungsendgruppe (31a) einen größeren Abstand vom Ständerkern hat als ein U-Wendeabschnitt eines jeden kleinen Segments, so dass
die erste Wicklungsendgruppe (31 a) für jedes Paar von Schlitzen, die voneinander um den Polabstand beabstandet sind, wenigstens zwei Wicklungsenden aufweist, welche in der Achsenrichtung bezüglich des jeweils anderen auf eine solche Weise verschoben sind, dass die projizierte Fläche der ersten Wicklungsendgruppe (31 a), von der inneren Seite des Ständerkerns aus betrachtet, größer ist als die entsprechende Fläche der zweiten Wicklungsendgruppe (31 b); wobei
an der zweiten Wicklungsendgruppe (31 b) die jeweiligen Enden der Leitersegmente so umgebogen sind, dass sie sich voneinander entfernen und Verbindungsabschnitte ausbilden, die einander in radialer Richtung überlappen.

2. Drehstromgenerator gemäß Anspruch 1, wobei
die erste Wicklungsendgruppe (31 a) wenigstens zwei Winkelabschnitte (331f, 332f) aufweist, welche mit den Wicklungsenden verbunden sind, wobei die Winkelabschnitte unterschiedliche Winkel dergestalt aufweisen, dass die Wicklungsenden in der Achsenrichtung bezüglich des jeweils anderen verschoben sind.

3. Drehstromgenerator gemäß Anspruch 1, wobei
ein U-Wendeabschnitt jedes großen Segments der ersten Wicklungsendgruppe (31 a) weiter von dem Ständerkern entfernt ist als ein U-Wendeabschnitt jedes kleinen Segments, und zwar auf eine solche Weise, dass sich der Neigungswinkel des Winkelabschnitts jedes großen Segments von dem Neigungswinkel jedes kleinen Segments unterscheidet.

4. Drehstromgenerator gemäß einem der Ansprüche 1 bis 3, wobei
die Luftantriebseinheit (11, 12) an dem Läufer (3) befestigt ist und einen ersten Kühllüfter (12), welcher an einem Ende des Läufers (3) nahe der ersten Wicklungsendgruppe (31 a) angeordnet ist, und einen zweiten Kühllüfter (11), welcher an der anderen Seite des Läufers (3) nahe der zweiten Wicklungsendgruppe (31 b) angeordnet ist, aufweist.

5. Drehstromgenerator gemäß Anspruch 4, wobei der erste Kühllüfter (12) ein Zentrifugalgebläse ist und der zweite Kühllüfter (11) ein Mischströmungsgebläse ist.

6. Drehstromgenerator gemäß einem der Ansprüche 1 bis 5, wobei
die Ständerwicklung aus einer Mehrzahl von Leiterelementen zusammengesetzt ist, welche in den Schlitzen ausgerichtet sind, um in inneren und äußeren Mittellagen (332a, 332b') und innersten und äußersten Lagen (331a, 331 b') angeordnet zu sein,
die erste Wicklungsendgruppe (31 a) eine Mehrzahl von innenseitigen Wicklungsenden zum Verbinden jener der Leiterelemente, welche in einer der Mittellagen (332a, 332b') angeordnet sind, und jener der Leiterelemente, welche in der anderen der Mittellagen (332a, 332b') um einen bestimmten Abstand hiervon entfernt angeordnet sind, sowie eine Mehrzahl von außenseitgen Wicklungsenden zum Verbinden jener der Leiterelemente, welche in der innersten Lage (331 b') angeordnet sind, und jener der Leiterelemente, welche in den äußersten Lagen (331a) um einen bestimmten Abstand hiervon beabstandet angeordnet sind, aufweist, und
die zweite Wicklungsendgruppe (31 b) eine Mehrzahl von Wicklungsenden sich berührender Lagen zum Verbinden jener der Leiterelemente, welche in der einen der Mittellagen (332a, 332b') angeordnet sind, und jener der Leiterelemente, welche in einer angrenzenden entweder innersten oder äußersten Lage (331 a, 331 b') um einen bestimmten Abstand hiervon entfernt angeordnet sind, aufweist.

7. Drehstromgenerator gemäß Anspruch 6, wobei
wenigstens vier der Leiterelemente in jedem der Schlitze (35) angeordnet sind.

## Revendications

1. Alternateur pour un véhicule, comportant :
un stator (2) ayant un noyau (32) de stator avec un enroulement de stator qui est inséré dans des fentes d'un noyau de stator et qui a des premier et deuxième groupes (31a, 31b) d'extrémités de bobine composés respectivement d'extrémités de bobine qui sont disposées de manières régulière et répétitivement annulaire selon le pas polaire sur des extrémités opposées dudit noyau (32) de stator dans la direction axiale de celui-ci,
un redresseur (5) disposé à proximité dudit premier groupe (31a) d'extrémités de bobine, et
une unité (11, 12) d'entraînement d'air destinée à envoyer de l'air de refroidissement auxdits premier et deuxième groupes (31a, 31b) d'extrémités de bobine,
**caractérisé en ce que**
ledit enroulement est formé par des segments conducteurs qui sont alignés dans la direction radiale dans les fentes du noyau de stator ;
ledit enroulement de stator est composé de petits et grands segments conducteurs en forme de U, une partie en demi-tour de chaque grand segment dudit premier groupe (31a) d'extrémités de bobine étant plus éloignée dudit noyau de stator qu'une partie en demi-tour de chaque petit segment ; de sorte que
ledit premier groupe (31a) d'extrémités de bobine a, pour chaque paire de fentes qui sont espacées d'un pas polaire, au moins deux extrémités de bobine qui sont décalées dans la direction axiale l'une de l'autre de façon à ce que la zone projetée dudit premier groupe (31a) d'extrémités de bobine, en regardant du côté interne dudit noyau de stator, soit plus grande que la zone correspondante dudit deuxième groupe (31b) d'extrémités de bobine ; où
au niveau dudit deuxième groupe (31b) d'extrémités de bobine, les extrémités respectives des segments conducteurs sont pliées pour se séparer et former des parties communes qui se chevauchent dans la direction radiale.

2. Alternateur selon la revendication 1, dans lequel ledit premier groupe (31a) d'extrémités de bobine dispose d'au moins deux parties inclinées (331f, 332f) qui sont reliées audites extrémités de bobine, lesdites parties inclinées ayant des angles différents de façon à ce que lesdites extrémités de bobine soient décalées dans la direction axiale l'une de l'autre.

3. Alternateur selon la revendication 1 ou 2, dans lequel une partie en demi-tour de chaque grand segment dudit premier groupe (31a) d'extrémités de bobine est plus éloignée dudit noyau de stator qu'une partie en demi-tour de chaque petit segment de façon à ce que l'angle d'inclinaison de la partie inclinée de chaque grand segment diffère de l'angle d'inclinaison de chaque petit segment.

4. Alternateur selon l'une des revendications 1 à 3, dans lequel
ladite unité (11, 12) d'entraînement d'air est fixée audit rotor (3) et dispose d'un premier ventilateur (12) disposé sur une extrémité dudit rotor (3) à proximité dudit premier groupe (31a) d'extrémités de bobine, et un deuxième ventilateur (11) disposé sur l'autre extrémité dudit rotor (3) à proximité dudit deuxième groupe (31b) d'extrémités de bobine.

5. Alternateur selon la revendication 4, dans lequel ledit premier ventilateur (12) est un ventilateur centrifuge et ledit deuxième ventilateur (11) est un ventilateur hélico-centrifuge.

6. Alternateur selon l'une des revendications 1 à 5, dans lequel
ledit enroulement de stator est composé d'une pluralité d'éléments conducteurs alignés dans lesdites fentes de sorte à être disposés dans des couches médianes interne et externe (332a, 332b') et les couches les plus interne et externe (331a, 331b'),
ledit premier groupe (31a) d'extrémités de bobine dispose d'une pluralité d'extrémités de bobine intérieures pour relier ceux desdits éléments conducteurs qui sont disposés dans l'une couche desdites couches médianes (332a, 332b') et ceux desdits éléments conducteurs qui sont disposés dans l'autre couche desdites couches médianes (332a, 332b') en étant espacés d'un certain pas, et une pluralité d'extrémités de bobine extérieures pour relier ceux des éléments conducteurs qui sont disposés dans ladite couche la plus interne (331b') et ceux desdits éléments conducteurs qui sont disposés dans ladite couche la plus externe (331a) en étant espacés d'un certain pas, et
ledit deuxième groupe (31b) d'extrémités de bobine dispose d'une pluralité d'extrémités de bobine à couche contigüe pour relier ceux desdits éléments conducteurs qui sont disposés dans ladite une couche desdites couches médianes (332a, 332b') et ceux desdits éléments conducteurs qui sont disposés dans une couche adjacente desdites couches les plus interne et externe (331a, 331b') en étant espacés d'un certain pas.

7. Alternateur selon la revendication 6, dans lequel
au moins quatre desdits éléments conducteurs sont disposés dans chacune desdites fentes (35).
